# EUROPEAN PATENT SPECIFICATION

(11) **EP 3 912 874 B1**
(45) Date of publication and mention of the grant of the patent: **26.04.2023**
(21) Application number: 20175364.7
(22) Date of filing: 19.05.2020
(51) Int. Cl.: B60T 17/08, F16D 65/18, F16D 121/24, F16D 127/06

(54) **ELECTROMECHANICAL BRAKE SYSTEM AND METHOD OF OPERATION**
ELEKTROMECHANISCHES BREMSSYSTEM UND VERFAHREN ZUM BETRIEB
SYSTÈME DE FREINAGE ÉLECTROMÉCANIQUE ET PROCÉDÉ DE FONCTIONNEMENT

(43) Date of publication of application: 24.11.2021
(73) Proprietor: KNORR-BREMSE Systeme für Nutzfahrzeuge GmbH, 80809 München (DE)
(72) Inventor: KOKREHEL, Csaba, 1119 Budapest (HU); NEMETH, Huba, 1116 Budapest (HU); BUCH, Andreas, 82024 Taufkirchen (DE); MLINARCSEK, Csaba, 1165 Budapest (HU); PAHLE, Wolfgang, 83707 Bad Wiessee (DE); BLESSING, Michael, 80687 München (DE); SZABO, Janos, 1042 Budapest (HU)

(56) References cited:
- EP-A1- 1 386 812
- WO-A1-2020/053022
- DE-A1-102006 037 242
- US-A1- 2013 133 989
- US-B2- 8 678 147

## Description

The invention refers to an electromechanical brake system and a corresponding method of operation.

Today, electro-pneumatic brake actuators are frequently used in commercial vehicles. In most cases, these actuators use pneumatic energy sources via pneumatic cylinders in order to realize the actuation of both the service and the parking brake. The parking brake function is realized by an independent actuator to the service brake and can be operated independently. Due to the spring based design of the parking brake actuator, single brake actuation can also be realized without compressed air as energy source. In the event of a pressure loss in the system, the pre-tensioned spring in the parking brake chamber provides sufficient braking energy to stop the vehicle or keep it stationary. To make the vehicle towable when no compressed air supply is available on board, the parking brake actuator must be released. In combined pneumatic brake chambers, this release can be achieved by means of a threaded mechanism. A threaded shaft is led out of the brake chamber and is accessible to an operator. The brake can be released by turning this shaft with an ordinary tool.

In the future, electromechanical brake actuation will become more and more common. These brakes must also be able to be released externally. In the event of a failure, if the brakes remain applied and cannot be released in the normal course of operation, a possibility of releasing the brakes is required to make the vehicle towable. Due to the complexity of the electromechanical actuators, a new solution for an external brake release is necessary.

US 8 678 147 B2 describes that in an electric brake, a plunger of an actuator is connected through a pin to a pivot arm to which an engaging pawl engageable with a tooth portion of a ratchet is pivotably attached. A lower surface (a force-receiving portion) of the pin is adapted to receive an upward force which is applied by a tool inserted through a bolt hole threadably engaged with a watertight bolt. When the parking brake is operated (the engaging pawl is engaged with the tooth portion of the ratchet), if supply of current to the coil becomes impossible, the pin is moved upward by means of the tool, to thereby separate the engaging pawl from the tooth portion. Therefore, an emergency action to release the parking brake can be manually conducted.

It is the object of the present application to provide an electromechanical brake system with brake release tools and a corresponding method permitting an external release of an electro-mechanical brake.

The object is achieved by a brake system comprising the features of claim 1 and a method comprising the features of claim 10.

According to the invention a parking brake mechanism of a disc brake with an external brake release function is provided. According to one aspect the brake system comprises a brake actuator having a power transmission means for transmitting an actuating force to a brake pad, said power transmission means including a rotatable shaft, a coupling means with a locking element, wherein the coupling means can be controlled so that the locking element is engaged with the rotatable shaft and blocks its rotation or so that the locking element is disengaged from the rotatable shaft so that the rotatable shaft can be rotated, wherein the brake actuator comprises an interface configured to be connected to the locking element and to engage or disengage the locking element from the rotatable shaft. The locking element has a disc-shape with one or more grooves or openings permitting an engagement of an interface component to shift the locking element. The interface component can be a lever or a fork-like element.

Release of the locking element is a prerequisite before the brake can be released with a tool element, as the brake actuator and the rotatable shaft cannot be turned when they are locked by the locking element. In brake systems, the locking element is held against the rotating shaft in a parking brake condition by a spring mechanism or other means such as a permanent magnet. In addition or alternatively, a spring mechanism can be provided that pushes or pulls the locking element into the opposite direction and assists the release of the locking element with the interface.

To release the brake the tool element, which can be a wrench, is arranged in the brake actuator of the brake system so that it engages the rotatable shaft and can be used to manually move the brake actuator and release or clamp the brake once the locking element is disengaged or released from the rotatable shaft. This allows the brake system to be released and activated from the outside even when the vehicle is not in use.

The parking brake mechanism of the disc brake is particularly suitable for heavy vehicles and particularly suitable for a parking brake of an electromechanical brake (EMB) system.

According to an embodiment the interface comprises an interface component that is configured to be pulled or pushed to disengage the locking element from the rotatable shaft. Hence, as alternatives a pull-type interface, where an interface component of the interface is configured to be pulled to disengage the locking element from the rotatable shaft, or a push-type interface can be provided, where the interface component is configured to be pushed to disengage the locking element from the rotatable shaft. The pulling or pushing can be effected by a mechanical lever or by an electric means such as an actuator or solenoid.

According to an embodiment the interface comprises a sealed connection through which the interface component is accessible. In particular, the sealed connection can be waterproof. Furthermore, the sealed connection can be configured such that it is only accessible with a special tool.

According to another embodiment the rotatable shaft comprises a rotating member in the form of a disk. The rotating member can be provided at one of the ends of the rotatable shaft.

According to yet another embodiment, the first and the second position can be interchanged regarding the engagement or disengagement between the locking element and the rotating member, respectively.

According to yet another embodiment the brake system comprises a receptacle into which a tool element can be inserted so that it engages with the rotatable shaft and transmits a rotation on the rotatable shaft.

According to an embodiment the locking element has the shape of a disc and is arranged on the coupling means in way so that it can be moved towards the rotating member and one of its sides is formed to engage one of the sides of the rotating member to block its rotation. The locking element also can be moved so that the one of its sides disengages from said one of the sides of the rotating member to allow its rotation.

The locking element and the rotating member of the rotatable shaft may be arranged as a releasable coupling where locking is achieved by engagement between the two opposing surfaces of the locking element and the rotating member through a mechanism which presses the locking element against the rotating member to achieve a parking brake condition. The mechanism can be a spring mechanism with one or more springs or some other means such as a permanent magnet. The mechanism may also have another arrangement in which one of the locking element or the rotating member is pulled against the respective other part to achieve the parking brake condition. The brake system may comprise means for moving the locking element with respect to the rotating member in regular brake service operation such as an electromagnetic actuator.

The locking element has a disc-shape with one or more grooves or openings permitting an engagement of an interface component to shift the locking element. The interface component can be a lever or a fork-like element.

According to an embodiment the locking element, the rotatable shaft and the rotating member are arranged coaxially with respect to their symmetry axes.

According to an embodiment the power transmission means are electrically driven and cause a rotational movement of the rotatable shaft. An electric motor may be used as an actuator.

According to an embodiment the coupling means and the locking means are arranged in an electro-magnetic parking brake locking mechanism for locking the brake actuator.

According to the invention a method of releasing an electro-mechanical brake is also provided. The method comprises the steps of using an interface of a brake actuator to insert an interface component into a locking element of the brake actuator, the locking element locking movement of the brake actuator; by the interface component disengaging the locking element from a rotatable shaft of the

According to an embodiment the locking element, the rotatable shaft and the rotating member are arranged coaxially with respect to their symmetry axes.

According to an embodiment the power transmission means are electrically driven and cause a rotational movement of the rotatable shaft. An electric motor may be used as an actuator.

According to an embodiment the coupling means and the locking means are arranged in an electro-magnetic parking brake locking mechanism for locking the brake actuator.

According to the invention also a method of releasing an electro-mechanical brake is provided. The method comprises acts or steps of using an interface of a brake actuator to insert an interface component into a locking element of the brake actuator, the locking element having a disc-shape with one or more grooves or openings permitting engagement of the interface component and locking movement of the brake actuator; by the interface component disengaging the locking element from a rotatable shaft of the brake actuator; and moving or turning a tool element to transmit power to the rotatable shaft to release the brake. Alternatively, or in addition the method may comprise the steps of inserting a tool element into a brake actuator of the electro-mechanical brake so that the tool element engages a rotatable shaft of the brake actuator, and moving the tool element to transmit torque to the rotatable shaft of the brake actuator to turn the rotatable shaft and to lock the brake, controlling the interface so that the locking element engages the rotatable shaft of the brake actuator so that the locking element locks the movement of the brake actuator and the rotatable shaft in a state of a locked brake.

According to an embodiment the method comprises the step of turning the tool element to release torque applied by the rotatable shaft to the locking element in the state of the locked brake before disengaging the locking element from the rotatable shaft.

The method can also include the action of moving the locking element into engagement with the rotatable shaft. This action can be conducted as part of the parking brake operation before use of the tool element for the disengagement of the locking element from the rotatable shaft described above but also after these actions, for example, when a vehicle has been towed and needs to be securely parked. The holding of the locking element into engagement with the rotatable shaft can be performed by a magnet, in particular, a permanent magnet of

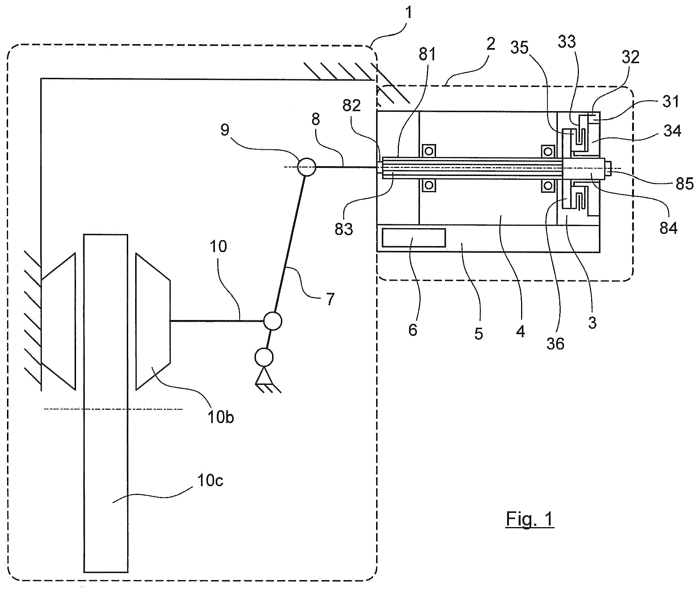

In Fig. 1 an electro-mechanical brake system is shown which comprises a brake calliper 1 and a brake actuator 2 which is connected to the brake calliper 1 and comprises a force transmission mechanism including a shaft assembly 8 and a lever assembly connected to the shaft assembly 8 via a push type or push-pull type joint 9. The lever assembly transmits the actuation force from a motor 4 such as an electric motor to one or more brake pads 10b via a push mechanism 10 which is in connection with a lever 7 of the lever assembly. The brake actuator 2 is constructed so that an actuation force generated by the motor 4 that is connected with a rotatable shaft 81 is transferred by a translational element 82 of the shaft assembly 8 via a rotational-translational converter mechanism as a translational force to the lever 7 which by rotation about a fixed point at the end of the lever 7 transfers the force to the one or more brake pads 10b that can contact a brake disc 10c in a braking operation. The brake actuator 2 also comprises an electro-magnetic coupling or clutch assembly 3.

The rotatable shaft 81 of the shaft assembly 8 extends throughout the entire brake actuator 2 and projects to the outside of the actuator housing through an electro-magnetic clutch unit 3. The rotatable shaft 81 of shaft assembly 8 may be designed as a single part 81 or as two separate parts 81, 84, in which case the second part 84 is rotationally fixed to the first part 81. In this case, the second part 84 of the rotatable shaft 81 of the shaft assembly 8 can be an integral part of the clutch assembly 3.

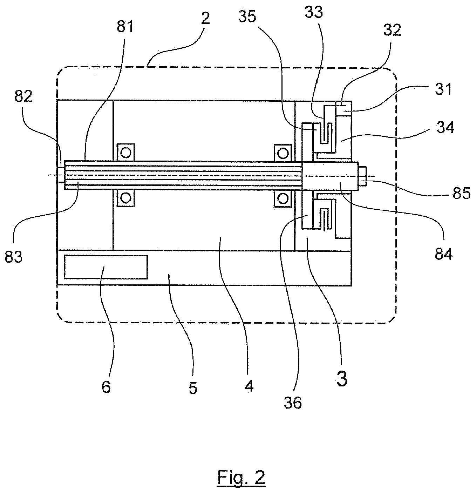

The clutch assembly 3 which is shown in Fig. 2 in greater detail has a rotating member 36 which is connected to the rotatable shaft 81 of the shaft assembly 8. The coupling assembly 3 further comprises a coupling body 34 with an electro-magnetic actuator inside and a locking element 35 that can be shifted by the electro-magnetic actuator. The clutch assembly 3 comprises a bi-stable clutch which comprises one or more springs, a permanent magnet and a solenoid (not shown). The springs hold the locking element 35 in a first position such as the position in which the locking element 35 engages the rotating member 36 of the rotatable shaft 81. The permanent magnet holds the locking element 35 in a second position such as a position in which the locking element 35 is disengaged from the rotating member 36. The coupling body 34 which comprises a solenoid is able to switch between the two positions in electrical operation. This represents just one example of a clutch assembly. Another coupling mechanism could be used instead. In particular, a clutch assembly can be provided in which the functions of the one or more springs and of the permanent magnet are interchanged so that the permanent magnet holds the locking element 35 in the first position in which the locking element 35 engages the rotating member 36 and the one or more springs hold the locking element 35 in the second position in which the locking element 35 is disengaged from the rotating member 36.

In a locked position the coupling body 34 forces the locking element 35 in contact with the rotating member 36 of the rotatable shaft 81. In the contact position the rotating member 36 and the locking element 35 and also the rotating member 36 and the coupling body 34 are torque-proof. In this way the coupling assembly 3 can fix the rotatable shaft 81 in a position which provides a constant brake force if the locking element 35 is activated after the clamping force has been applied by the brake actuator 2 to the one or more brake pads 10b.

For an external release of the parking brake an interface 31 is provided at the end of the actuator housing. This interface 31 is sealed and preferably waterproof and comprises an interface component 32 such as a release element 33 that is only accessible with special tools. Figure 2 shows a pull-type release interface 31, where the interface component is configured or arranged to be pulled to disengage locking element 35 from the rotating member 36 with the help of a fork-like release element 33 which is in contact with the locking element 35. The fork-like release element 33 engages into grooves or openings in the locking element 35 and can be pulled mechanically or magnetically by means of an actuator.

For a smooth release of the brake the rotatable shaft 81 can be held with help of a wrench (not shown) which engages the rotatable shaft 81 or the rotating member 36 which is connected to it. After the locking element 35 is disengaged from the rotatable shaft 81 the pre-tensioned brake can be released by rotating the rotatable shaft 81 with the wrench.

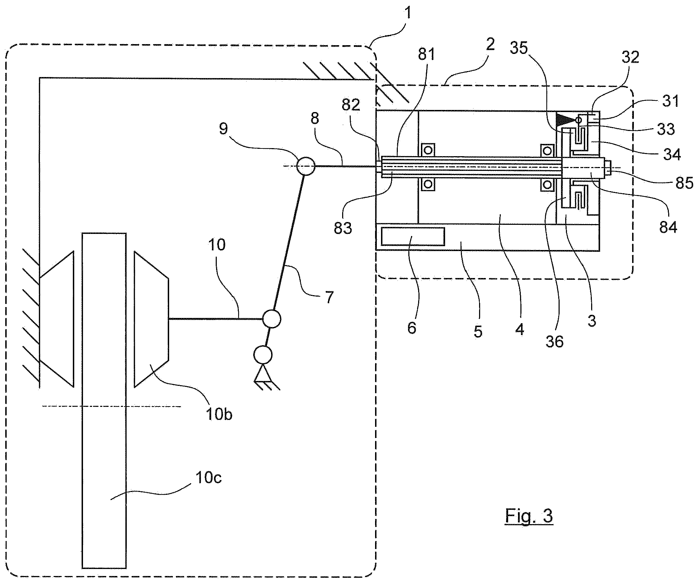

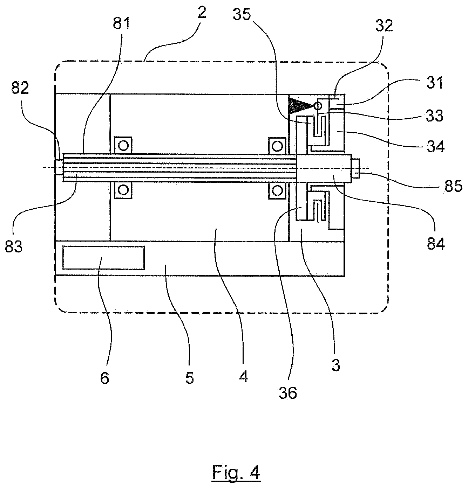

In the embodiment shown in Fig. 3, a push-type release interface 31 is provided, where the interface component 32 is configured to be pushed to disengage the locking element 35 of the clutch assembly 3 from the rotational element 36 with the help of a lever-like release element 33 which is in contact with locking element 35. Fig. 4 shows the clutch assembly 3 with the push-type release interface 31 in greater detail. Besides the push-type release interface 31 the electro-mechanic brake shown in Figs. 3 and 4 corresponds to the electro-mechanic brake shown in Figs. 1 and 2. The same or corresponding reference numerals are used throughout the figures.

### Reference numerals:

- 1: brake calliper
- 2: brake actuator
- 3: electromagnetic coupling assembly
- 4: electric motor
- 7: lever assembly
- 8: shaft assembly
- 9: joint
- 10: push mechanism
- 10b: brake pad
- 10c: brake disc
- 31: interface
- 32: interface component
- 33: release element
- 34: coupling body
- 35: coupling moving element
- 36: rotating member
- 81: rotatable shaft
- 82: translational element

## Claims

1. An electromechanical brake system comprising:
a brake actuator (2) having a power transmission means for transmitting an actuating force to a brake pad, said power transmission means including a rotatable shaft (81);
a coupling means with a locking element (35), wherein the coupling means can be controlled so that the locking element (35) is engaged with the rotatable shaft (81) and blocks its rotation or so that the locking element (35) is disengaged from the rotatable shaft (81) so that the rotatable shaft (81) can be rotated, wherein the brake actuator (2) comprises an interface (31) configured to be connected to the locking element (35) and to engage or disengage the locking element (35) from the rotatable shaft (81),
**characterised in that**
the locking element (35) has a disc-shape, with one or more grooves or openings permitting engagement of an interface component.

2. The brake system according to claim 1, wherein the interface (31) comprises an interface component (32) that is configured to be pulled or pushed to disengage the locking element from the rotatable shaft (81).

3. The brake system according to claim 2, wherein the interface (31) comprises a sealed connection through which the interface component (32) is accessible.

4. The brake system according to one of claims 1 to 3, wherein the rotatable shaft (81) comprises a rotating member (36) in the form of a disk.

5. The brake system according to claim 4, wherein the coupling means comprises a spring for moving the locking element (35) to a position in which it engages one of the sides of the rotating member (36).

6. The brake system according to claim 3 or 4, further comprising a first receptacle into which a tool element can be inserted so that it engages the rotatable shaft (81) and transmits a rotation on the rotatable shaft (81).

7. The brake system according to one of claims 4 to 6, in which the locking element (35) has the shape of a disc and is arranged on the coupling means so that it can be moved so that one of its sides can be engaged with one of the sides of the rotating member (36) to block its rotation and can be disengaged from said one of the sides of the rotating member (36) to allow its rotation.

8. The brake system according to any one of claims 1 to 7, wherein the power transmission means are electrically driven and cause a rotational movement of the rotatable shaft (81).

9. The brake system according to any one of claims 1 to 8, wherein the coupling means are arranged in an electro-magnetic parking brake locking mechanism for locking the brake actuator.

10. A method of releasing an electro-mechanical brake, comprising:
using an interface of a brake actuator (2) to insert an interface component (32) into a locking element (35) of the brake actuator, the locking element (35) having a disc-shape with one or more grooves or openings permitting engagement of the interface component for locking and releasing movement of the brake actuator;
by the interface component (32) disengaging the locking element (35) from a rotatable shaft (81) of the brake actuator; and
moving a tool element (31) to transmit power to the rotatable shaft (81) to release the brake.

11. The method of claim 11, further comprising turning the tool element (31) to release torque applied by the rotatable shaft (81) to the locking element (35) in the state of the locked brake before disengaging the locking element (35) from the rotatable shaft (81).

## Patentansprüche

1. Elektromechanisches Bremssystem, das Folgendes umfasst:
einen Bremsaktuator (2), der ein Leistungsübertragungsmittel zum Übertragen einer Betätigungskraft auf einen Bremsklotz aufweist, wobei das Leistungsübertragungsmittel eine drehbare Welle (81) umfasst; ein Kopplungsmittel mit einem Verriegelungselement (35), wobei das Kopplungsmittel derart gesteuert werden kann, dass das Verriegelungselement (35) mit der drehbaren Welle (81) in Eingriff gebracht wird und ihre Drehung blockiert, oder dass das Verriegelungselement (35) von der drehbaren Welle (81) gelöst wird, so dass die drehbare Welle (81) gedreht werden kann, wobei der Bremsaktuator (2) eine Schnittstelle (31) umfasst, die dazu ausgelegt ist, mit dem Verriegelungselement (35) verbunden zu werden und das Verriegelungselement (35) mit der drehbaren Welle (81) in Eingriff zu bringen und von dieser zu lösen,
**dadurch gekennzeichnet, dass**
das Verriegelungselement (35) eine Scheibenform mit einer oder mehreren Nuten oder Öffnungen aufweist, die einen Eingriff einer Schnittstellenkomponente ermöglichen.

2. Bremssystem nach Anspruch 1, wobei die Schnittstelle (31) eine Schnittstellenkomponente (32) umfasst, die dazu ausgelegt ist, gezogen oder gedrückt zu werden, um das Verriegelungselement von der drehbaren Welle (81) zu lösen.

3. Bremssystem nach Anspruch 2, wobei die Schnittstelle (31) eine abgedichtete Verbindung umfasst, durch die die Schnittstellenkomponente (32) zugänglich ist.

4. Bremssystem nach einem der Ansprüche 1 bis 3, wobei die drehbare Welle (81) ein drehendes Element (36) in der Form einer Scheibe umfasst.

5. Bremssystem nach Anspruch 4, wobei das Kopplungsmittel eine Feder zum Bewegen des Verriegelungselements (35) in eine Position, in der es eine der Seiten des drehenden Elements (36) in Eingriff bringt, umfasst.

6. Bremssystem nach Anspruch 3 oder 4, ferner umfassend eine erste Aufnahme, in die ein Werkzeugelement eingesetzt werden kann, so dass es die drehbare Welle (81) in Eingriff bringt und eine Drehung der drehbaren Welle (81) überträgt.

7. Bremssystem nach einem der Ansprüche 4 bis 6, wobei das Verriegelungselement (35) die Form einer Scheibe aufweist und an dem Kopplungsmittel derart angeordnet ist, dass es derart bewegt werden kann, dass eine seiner Seiten mit einer der Seiten des drehenden Elements (36) in Eingriff gebracht werden kann, um seine Drehung zu blockieren, und von der einen der Seiten des drehenden Element (36) gelöst werden kann, um seine Drehung zu ermöglichen.

8. Bremssystem nach einem der Ansprüche 1 bis 7, wobei die Leistungsübertragungsmittel elektrisch betrieben sind und eine Drehbewegung der drehbaren Welle (81) bewirken.

9. Bremssystem nach einem der Ansprüche 1 bis 8, wobei die Kopplungsmittel in einem Verriegelungsmechanismus einer elektromagnetischen Parkbremse zum Verriegeln des Bremsaktuators angeordnet sind.

10. Verfahren zum Freigeben einer elektromechanischen Bremse, umfassend:
Verwenden einer Schnittstelle eines Bremsaktuators (2), um eine Schnittstellenkomponente (32) in ein Verriegelungselement (35) des Bremsaktuators einzusetzen, wobei das Verriegelungselement (35) eine Scheibenform mit einer oder mehreren Nuten oder Öffnungen aufweist, die einen Eingriff der Schnittstellenkomponente zum Verriegeln und Freigeben einer Bewegung des Bremsaktuators ermöglichen;
durch die Schnittstellenkomponente (32), Lösen des Verriegelungselements (35) von einer drehbaren Welle (81) des Bremsaktuators; und
Bewegen eines Werkzeugelements (31), um Leistung auf die drehbare Welle (81) zu übertragen, um die Bremse freizugeben.

11. Verfahren nach Anspruch 11, ferner umfassend Drehen des Werkzeugelements (31), um ein durch die drehbare Welle (81) auf das Verriegelungselement (35) aufgebrachtes Drehmoment in dem Zustand der verriegelten Bremse vor Lösen des Verriegelungselements (35) von der drehbaren Welle (81) freizugeben.

## Revendications

1. Système électromécanique de frein, comprenant :
un actionneur (2) de frein ayant un moyen de transmission de force pour transmettre une force d'actionnement à une plaquette de frein, le moyen de transmission de force ayant un arbre (81) tournant ;
un moyen d'accouplement ayant un élément (35) de verrouillage, dans lequel le moyen d'accouplement peut être commandé, de manière à ce que l'élément (35) de verrouillage s'enclenche avec l'arbre (81) tournant et bloque sa rotation ou de manière à ce que l'élément (35) de verrouillage se désenclenche de l'arbre (81) tournant, de sorte que l'arbre (81) tournant peut être mis en rotation, dans lequel l'actionneur (2) de frein comprend une interface (31), configurée pour être reliée à l'élément (35) de verrouillage et pour enclencher ou désenclencher l'élément (35) de verrouillage de l'arbre (81) tournant,
**caractérisé en ce que**
l'élément (35) de verrouillage a la forme d'un disque ayant une ou plusieurs rainures ou ouvertures permettant l'enclenchement d'un composant d'interface.

2. Système de frein suivant la revendication 1, dans lequel l'interface (31) comprend un composant (32) d'interface, qui est configuré pour être tiré ou poussé, pour désenclencher l'élément de verrouillage de l'arbre (81) tournant.

3. Système de frein suivant la revendication 2, dans lequel l'interface (31) comprend une connexion scellée, par laquelle le composant (32) d'interface est accessible.

4. Système de frein suivant l'une des revendications 1 à 3, dans lequel l'arbre (81) tournant comprend un élément (36) tournant sous la forme d'un disque.

5. Système de frein suivant la revendication 4, dans lequel le moyen d'accouplement comprend un ressort pour faire aller l'élément (35) de verrouillage à une position, dans lequel il s'enclenche avec l'un des côtés de l'élément (36) tournant.

6. Système de frein suivant la revendication 3 ou 4, comprenant en outre un premier réceptacle, dans lequel un élément d'outil peut être inséré, de manière à ce qu'il s'enclenche avec l'arbre (81) tournant et transmette une rotation à l'arbre (81) tournant.

7. Système de frein suivant l'une des revendications 4 à 6, dans lequel l'élément (35) de verrouillage a la forme d'un disque et est monté sur le moyen d'accouplement, de manière à pouvoir être déplacé, de façon à ce que l'un de ses côtés puisse s'enclencher avec l'un des côtés de l'élément (36) tournant pour en bloquer la rotation, et peut se désenclencher dudit un des côtés de l'élément (36) tournant pour en permettre la rotation.

8. Système de frein suivant l'une quelconque des revendications 1 à 7, dans lequel le moyen de transmission de force est entraîné électriquement et provoque un mouvement de rotation de l'arbre (81) tournant.

9. Système de frein suivant l'une quelconque des revendications 1 à 8, dans lequel le moyen d'accouplement est monté dans un mécanisme électromagnétique de verrouillage de frein de stationnement, pour verrouiller l'actionneur de frein.

10. Procédé de desserrage d'un frein électromagnétique, comprenant :
l'utilisation d'une interface d'un actionneur (2) de frein pour insérer un composant (32) d'interface dans un élément (35) de verrouillage de l'actionneur de frein, l'élément (35) de verrouillage ayant la forme d'un disque ayant une ou plusieurs rainures ou ouvertures permettant l'enclenchement du composant d'interface pour le mouvement de verrouillage et de déverrouillage de l'actionneur de frein ;
par le composant (32) d'interface désenclenchant l'élément (35) de verrouillage d'un arbre (81) tournant de l'actionneur de frein ; et
le déplacement d'un élément (31) d'outil pour transmettre de la force à l'arbre (81) tournant pour desserrer le frein.

11. Procédé suivant la revendication 11, comprenant en outre tourner l'élément (31) d'outil pour relâcher un couple appliqué par l'arbre (81) tournant à l'élément (35) de verrouillage, dans l'état du frein verrouillé, avant de désenclencher l'élément (35) de verrouillage de l'arbre (81) tournant.
